# NEUE EUROPÄISCHE PATENTSCHRIFT

(11) **EP 1 917 199 B2**
(45) Veröffentlichungstag und Bekanntmachung des Hinweises auf die Entscheidung über den Einspruch: **05.08.2015**
(45) Hinweis auf die Patenterteilung: 21.03.2012
(21) Anmeldenummer: 06761768.8
(22) Anmeldetag: 06.07.2006
(51) Int. Cl.: B65D 81/26

(54) **SAUGEINLAGE FÜR LEBENSMITTELVERPACKUNGEN**
ABSORBENT INSERT FOR FOODSTUFF PACKAGING
INSERT ABSORBANT POUR EMBALLAGES ALIMENTAIRES

(30) Priorität: 12.07.2005 DE 102005032432
(43) Veröffentlichungstag der Anmeldung: 07.05.2008
(73) Patentinhaber: McAirlaid's Vliesstoffe GmbH, 48565 Steinfurt (DE)
(72) Erfinder: SCHMIDT, Andreas, 37115 Duderstadt (DE)
(74) Vertreter: Christophersen, Ruth
(86) Internationale Anmeldenummer: PCT/DE2006/001166
(87) Internationale Veröffentlichungsnummer: WO 2007/006272

(56) Entgegenhaltungen:
- EP-A1- 0 598 970
- EP-A1- 0 995 414
- EP-A1- 1 640 290
- EP-A2- 1 234 783
- EP-B1- 0 434 733
- WO-A1-93/22995
- DE-A1- 3 521 374
- DE-U1- 20 200 661
- US-A- 5 552 169
- US-A1- 2003 108 646
- US-A1- 2004 226 834

## Beschreibung

Die vorliegende Erfindung betrifft eine Saugeinlage, insbesondere eine absorbierende Saugeinlage für Lebensmittelverpackungen aus einer oberen Abdecklage, einer unteren Abdecklage sowie einer zwischen den Abdecklagen befindlichen Absorptionslage und deren Verwendung als Laminat-Einlage für Lebensmittelverpackungen, gemäß dem Oberbegriff des Anspruchs 1.

Laminat-Einlagen für Lebensmittelverpackungen sind bekannt. Diese dienen dazu, eine saubere Trennung zwischen dem Lebensmittel, insbesondere Frischfleisch, aus dem Fleischsaft austreten kann, und der Verpackung zu gewährleisten. Die bekannten Laminat-Einlagen enthalten eine Absorptionslage, welche in der Regel einen superabsorbierenden Kunststoff enthält, um die austretenden Flüssigkeiten zu absorbieren, in ein Gel umzuwandeln und im Inneren der Laminat-Einlage festzuhalten. In der WO 90/03320 wird eine Einlage für Fleisch- und Geflügelprodukte beschrieben, in welche ein Absorber eingearbeitet ist. Der Absorber umfasst obere und untere Lagen aus Kunststoff, wobei mindestens eine perforiert ist, und eine Zwischenlage, die zwischen den beiden anderen Schichten angeordnet ist. Die mittlere Absorberschicht enthält eine Vielzahl von ungerichteten und sich überlagernden Fasern aus Absorptionsmaterial, welches darin verteilte Granulate aus Superabsorber enthält. Die Granulate werden innerhalb dieser Schicht von den Fasermaterialien gegen Verschieben und Verrutschen gehalten und bleiben auch in dieser Position, selbst wenn die Flüssigkeit absorbiert wurde. Die oberen und unteren Lagen aus Kunststofffilm sind zumindest entlang ihrer sich gegenüberliegenden Kanten teilweise miteinander verbunden, um die Absorberschicht zwischen den oberen und unteren Lagen zu halten.

In der deutschen Patentanmeldung 103 01 171 A1 wird eine weitere absorbierende Laminat-Einlage für Lebensmittelverpackungen, insbesondere Fleischverpackungen, offenbart. Die Einlage besteht aus zwei Folienlagen aus einem thermoplastischen Material, von denen wenigstens die obere Folienlage perforiert ist, und aus einer zwischen den Folienlagen befindlichen Absorptionslage, die im Wesentlichen aus ungeordnet gelegten Zellstofffasern mit Partikeln aus superabsorbierendem Material besteht. Die Perforationen konvergieren von außen zum Inneren der Laminat-Einlage. Am Grund der Perforation ist die Zellstoff-Faserlage stark verdichtet, die Zellstofffasern sind am Grund der Perforation bindemittelfrei durch Druck fusioniert.

So offenbart US 2003/108646 ein Pad zum Aufnehmen von flüssigem Exsudat aus Lebensmittelprodukten. Dieses Pad besteht aus zwei miteinander laminierten, für eine Flüssigkeit undurchlässigen Lagen, wobei sich durch das gemeinsame Laminieren zwischen den beiden Lagen Taschen bilden, in denen SAP enthalten ist. Die beiden Lagen sind perforiert, d. h. sie weisen Öffnungen auf, durch die die Flüssigkeit eindringen kann.

In US 2004/226834 wird eine mehrschichtige Saugeinlage offenbart, die eine obere und eine untere Lage aus thermoplastischem Material und dazwischen angeordnetem Absorptionsmaterial aufweist. Das Absorptionsmaterial kann u. a. Zellulose sein. Die beiden Abdecklagen sind thermisch miteinander verbunden, d. h. das Saugmaterial ist in in sich geschlossenen Räumen eingelagert, wobei der Zufluss von zu absorbierenden Flüssigkeiten über Perforationen erfolgt.

Üblicherweise liegt das Frischfleisch unter Zwischenlage der Saugeinlage auf einem Tablett, einer SB-Fleischschale oder einem so genannten Tray. Die Saugeinlage hat die Aufgabe, die Flüssigkeit aufzunehmen, die ohne Druck und Absaugkräfte aus dem Fleisch austritt. Das Fleisch soll aber nicht aktiv ausgesogen werden, da es sonst austrocknet und sich gefrierbrandähnliche Fehlstellen bilden. Auf der anderen Seite soll auch jedes Austreten der Flüssigkeit und Absorptionsmaterial aus der Einlage in Richtung Frischfleisch bzw. gelagertes Gut vermieden werden.

Die aus dem Stand der Technik bekannten Saugeinlagen zeigen vielfach den Nachteil,
- dass die aus dem Frischfleisch austretende Flüssigkeit aufgrund ihrer Zusammensetzung mehr oder weniger schlecht absorbiert wird,
- dass die Perforationsöffnungen in der Abdeckfolie sich durch den Fleischsaft sehr schnell verstopfen,
- dass das Fleisch die Eintrittsöffnungen für den Fleischsaft bei glatter Oberfläche dicht abdeckt und somit ein Absorbieren stark behindert und/oder verhindert,
- dass bedingt durch offene Schnittkanten keine superabsorbierenden Granulate eingesetzt werden können,
- dass der Gewichtsdruck, den das Fleisch beim Aufliegen auf der Einlage auf diese ausübt, dazu führt, dass an diesen aufliegenden Stellen mehr Flüssigkeit absorbiert wird (sogenannter Dochteffekt), als dies der Fall sein würde, wenn das Fleisch
"drucklos" mit dem Saugkörper der Einlage in Kontakt wäre, so dass es leicht zum Austrocknen des Fleisches kommen kann.

Der vorliegenden Erfindung liegt somit die Aufgabe zugrunde, Saugeinlagen zur Verfügung zu stellen die diese üblichen Probleme lösen, die insbesondere als Einlagen für Lebensmittelverpackungen geeignet sind, welche aus Lebensmitteln wie Frischfleisch, Fisch, Geflügel, und Früchten austretende Flüssigkeiten absorbieren, so dass die Lebensmittel nicht in der austretenden Flüssigkeit liegen, dass aber auch vermieden wird, dass mehr als die ohne Gewichtsdruck austretende Flüssigkeit absorbiert wird, was zu einem Austrocknen des Lebensmittels führen würde. Aufgabe der vorliegenden Erfindung ist somit insbesondere eine Saugeinlage der eingangs genannten Art zur Verfügung zu stellen, welche Flüssigkeit unabhängig vom Gewichtsdruck der Ware absorbiert, die aber an den Punkten, auf denen das Lebensmittel bzw. das Fleisch direkt aufliegt, nur die selbstständig freiwerdende Flüssigkeit absorbiert. Ein aktives Entwässern des Fleisches soll konstruktiv verhindert, sowie die sichere Handhabung der superabsorberbierenden Granulate konstruktiv gewährleistet werden.

Gegenstand der vorliegenden Erfindung ist demgemäß eine Saugeinlage gemäß Anspruch 1.

Die erfindungsgemäße Saugeinlage hat den Vorteil, dass die auf dieser Einlage aufliegenden Lebensmittel vor allem auf Bereichen aufliegen und derart Gewichtsdruck ausüben, die in Richtung Lebensmittel bzw. auszulegendes Gut hervorstehen, die also erhaben ausgestaltet sind. Die austretende Flüssigkeit kann durch die durchlässigen Öffnungen in Richtung Absorptionslage eintreten und wird von dieser dann erst absorbiert. Vorzugsweise wird die Abdecklage derart ausgesteift, dass sie den Gewichtsdruck des Fleisches ein Maximum an Stabilität gegen Verformung entgegensetzt.

Erfindungsgemäß ist die obere Abdecklage eine Folie. Die dreidimensionale Struktur ist in der Abdecklage vorzugsweise derart ausgebildet, dass die Folie Einsenkungen aufweist, die nach innen hineingerichtet sind. Diese können nach innen hin konisch oder pyramidal zulaufen. In dieser Ausführungsform befinden sich die für Flüssigkeit durchlässigen Öffnungen am Boden der Einsenkungen, d.h. den Abschnitten der dreidimensionalen Struktur, die der Absorptionslage am nächsten sind. Vorzugsweise haben die Öffnungen die Form von Schlitzen oder sind kleine punktförmige Öffnungen. Diese Ausführungsform hat den Vorteil, dass sich, wenn Lebensmittel wie Fleisch auf der Saugeinlage aufliegen, die austretende Flüssigkeit in den Einsenkungen sammeln und durch die durchlässigen Öffnungen am Boden dieser Einsenkungen in die Absorptionslage eintreten kann. An den Stellen, an denen das Lebensmittel voll auf der Saugeinlage aufliegt, also auf diese Druck ausübt, der so groß ist, dass sich die Folie deformiert, stauchen sich diese dreidimensionalen Strukturen punktuell zusammen, was gleichzeitig zur Folge hat, dass sich die für Flüssigkeit durchlässigen Öffnungen ähnlich einer Ventillippe verschließen. Für das zu lagernde Lebensmittel hat diese Ausgestaltung den Vorteil, dass ohne Druck auslaufende Flüssigkeit sofort absorbiert wird, während in Bereichen mit großer Druckausübung auf die Saugeinlage sich die Öffnungen verschließen, so dass keine weitere nennenswerte Flüssigkeit mehr absorbiert wird. Logischer weise entweicht dann aus einer so punktuell abgedeckten Oberfläche auch keine Produktflüssigkeit mehr. Damit ist in diesen angenäherten Bereichen, also dort wo das Fleisch sehr nahe an dem Saugkern anliegt und wo es üblicher Weise bei einer einfach perforierten Folie zu einer aktiven Entwässerung kommen kann, keine Öffnung mehr vorhanden, bzw. diese sehr weit verkleinert. Weiterhin wird durch den Verschluss der Öffnung ein migrieren von Bestandteilen aus dem Saugkern heraus in Richtung des Fleisch extrem minimiert bzw. sogar verhindert.

Die obere Abdecklage ist vorzugsweise ausgewählt aus einem dehnbaren und/oder thermisch verformbaren und in Form von Folien verfügbaren Material, vorzugsweise aus einem thermoplastischen Kunststoff. Derartige Kunststoffmaterialien können Polyolefine, wie z.B. Polyethylen mit hoher, mittlerer oder niedriger Dichte, Polypropylen, mit hoher, mittlerer oder niedriger Dichte, Polyethylenterephthalat, diverse Copolymere aus diesen Materialien oder auch Coextrudate aus diesen Materialien sein. Ebenfalls geeignet und gut verarbeitbar sind biologisch abbaubare Folien.

Die obere Abdecklage ist vorzugsweise an der dem Lebensmittel zugewandten Seite der erfindungsgemäßen Saugeinlage angeordnet. Diese Seite wird im Folgenden als Oberseite bezeichnet.

Die auf der Unterseite der Saugeinlage angeordnete untere Abdecklage, d.h. die auf der dem Lebensmittel abgewandten Seite angeordnet ist, kann aus einem beliebigen Material bestehen, das eine abdeckende Eigenschaft aufweist. Vorzugsweise besteht diese weitere Folienlage an der Unterseite der Saugeinlage aus dem gleichen Material wie die Folienlage auf der Oberseite oder aus einem vliesartigen Material auf Kunststoffbasis oder auf Cellulosebasis.

Für verschiedene Anwendungen, z.B. vorkonfektionierte Einzelpads für die Fleischschalen, hat es sich von Vorteil erwiesen, beide Oberflächen mit der gleichen modifizierten Folie zu versehen. Dadurch, dass beide Oberflächen gleich beschaffen sind, entfällt ein zeitaufwendiges orientieren der Produkte beim Einlegen in die Verpackung.

Die beiden Folienlagen sind erfindungsgemäß an ihren Außenkanten mindestens teilweise verschlossen. Vorzugsweise sind sie entlang der Außenkanten miteinander verbunden. Eine solche Ausgestaltung verhindert, dass Material aus der Absorptionslage seitwärts heraustritt und mit dem Lebensmittel in Kontakt kommt. In einer möglichen Ausgestaltung sind nur die Folienlagen miteinander verbunden, vorzugsweise miteinander verschweißt, ohne die Absorptionslage mit zu erfassen. In dieser Ausgestaltung ist die Absorptionslage quasi vollständig von den beiden Folienlagen umhüllt. In dieser Ausgestaltung wird ein relativ weiches Produkt erhalten, das auch innerhalb der Folienumhüllung verrutschen kann.

In einer weiteren Ausführungsform werden die Kanten der Absorptionslage beim Verbinden der Folienlagen miterfasst. Dadurch wird ein relativ hartes und festes Produkt erhalten, da die Absorptionslage nicht innerhalb der Umhüllung verrutschen kann.

In einer weiteren Ausführung werden die Schichten zusätzlich mittels Klebstoffen wie Hotmelt, Kaltleim usw. mit einander flächig fest verbunden. Es entsteht ein relativ steifes Produkt mit zumindest teilweise verschlossen und versiegelten Randbereichen, wobei das Produkt selber einen Sandwich-Charakter aufweist.

Die Absorptionslage, die zwischen den beiden Folienlagen angeordnet ist, ist vorzugsweise aus einem vliesartigen oder gewebeartigen Material auf Kunststoff- oder Zellstoffbasis ausgewählt. Gut absorbierende Vliesmaterialien auf Zellstoffbasis sind bevorzugt. Als besonders geeignete Absorptionslagen haben sich so genannte Airlaid-Vliese oder Tissuepapiere erwiesen. Zur Erhöhung der Absorptionskapazität der Absorptionslage sind in die Absorptionsmaterialien vorzugsweise superabsorbierende Materialien eingearbeitet. Diese superabsorbierenden Materialien sind besonders bevorzugt homogen innerhalb der Absorptionslage verteilt, so dass eine gleichmäßige Aufnahme der Flüssigkeit gewährleistet ist. Werden Airlaid-Vliese in Kombination mit superabsorbierenden Materialien als Absorptionslage eingesetzt, so werden diese Superabsorber in der Regel direkt mit den Ausgangsfasem für das Airlaid-Verfahren vermischt, so dass die Superabsorber auch gleichzeitig von den Fasern im Airlaid-Vlies gehalten werden. Die superabsorbierenden Materialien können aus beliebigen Superabsorbem ausgewählt werden, üblicherweise werden sie ausgewählt aus Polymeren auf Basis von vernetzter Polyacrylsäure, Carboxymetylcellulose (CMC), Pektinen oder Gelatinen.

In einer weiteren Ausgestaltung werden zur Erhöhung der Absorptionskapazität in der Absorptionslage, schichtweise zwischen Lagen von Tissuepapieren oder Vliesen superabsorbierende Materialien eingestreut bzw. eingeklebt.

Die Absorptionslage kann auch Substanzen enthalten, die unter Einwirkung von Wasser Kohlendioxid erzeugen, insbesondere ein Gemisch aus Carbonaten und Säuren, wie Carbonat oder Bicarbonat und Zitronensäure. Es können auch Additive enthalten sein, die Sauerstoff und/oder Geruchsstoffe absorbieren und/oder das Wachstum von Bakterien und/oder Schimmelpilzen hemmen.

In einer weiteren Ausgestaltung der vorliegenden Erfindung sind ober- und unterhalb der Absorptionslage noch ein oder mehrere Vliesgewebe oder ähnliche Lagen angeordnet, oder die Absorptionslage ist mit solchen Geweben beschichtet. Durch diese Gewebe wird die Absperrwirkung, wenn auf die Saugeinlage Druck ausgeübt wird, erheblich verbessert.

Die Saugeinlagen können als einzelne Einlagen konfektioniert werden oder in Form eines ein-oder mehrreihigen Produktstranges vorliegen, wobei die einzelnen Saugeinlagen durch Perforierungen oder andere Schwächungen miteinander verbunden sind. In einer weiteren Ausgestaltung dieser Ausführungsform wird der Produktstrang in einer Verpackung Zickzack-förmig gelegt, wobei die Enden der Saugeinlagen jeweils miteinander verbunden sind.

Zur Herstellung der erfindungsgemäßen Saugeinlagewird eine Absorptionslage, die Sauggröße aufweist, beidseitig mit Abdecklagen bedeckt, wobei die obere Abdecklage aus einem wasserundurchlässigen Material besteht und eine dreidimensionale Struktur aufweist, und die Abdecklagen thermisch oder durch Druck an ihren Außenkanten wenigstens teilweise verschlossen werden.

Zur Herstellung der erfindungsgemäßen Saugeinlage wird eine Absorptionslage, die Sauggröße aufweist, beidseitig mit Folienlagen bedeckt, die obere Abdecklagelage wird mit der 3-dimensionalen Strukturierung versehen, und die Abdecklagen werden thermisch oder durch Druck an ihren Außenkanten wenigstens teilweise verschlossen.

Vorzugsweise werden in einem ersten Verfahrensschritt die Absorptionslagen hergestellt und auf Sauggröße zugeschnitten. Anschließend erfolgt die Zufuhr der Abdecklagen für die Oberseite und die Rückseite der Saugeinlage. Sofern nicht mit einer vorstrukturierten Abdecklage gearbeitet wird, wird In den nachfolgenden Verfahrensschritten auf die Oberseite und ggf. auch auf die Rückseite die dreidimensionale Strukturierung der Folie aufgebracht und die Außenkanten werden miteinander verbunden, vorzugsweise miteinander verschweißt. Das Strukturieren der Folien kann thermisch und/oder durch mechanische Dehnung erfolgen. In einer möglichen Ausgestaltung wird die bereits aus drei Lagen bestehende Vorstufe der Saugeinlage durch eine weitere Lage geführt, wobei mindestens eine der Walzen als Prägewalze ausgebildet ist, so dass in das Folienmaterial die Einsenkungen nach unten eingedrückt werden. Das Einbringen der Öffnungen kann in an sich bekannter Weise durch übliche Schneidwerkzeuge, als Modifikation an der Prägung oder mittels Kalt- bzw Heißnadelung oder punktuellem Überdehnen der Folie erfolgen. In einer bevorzugten Ausgestaltung weisen die bei der Strukturierung vorzugsweise eingesetzten Prägewalzen an ihrer Struktur Schneidkanten auf, die in die Folien beim Formen gleichzeitig Öffnungen in der gewünschten Größe und Form erzeugen.

Wie bereits oben beschrieben können die einzelnen Saugeinlagen in Form von Produktsträngen vorliegen. Das Verbinden des einzelnen Saugeinlagen zu Produktsträngen kann mittels thermischer oder mechanischer Siegelverfahren oder mittel Haftklebstoffen erfolgt.

In einem abschließenden Schritt können die Produktstränge zu Rollen oder Spulen aufgewickelt werden. Eine weitere Darbietungsform ist der bandgelegte Materialstapel.

Die erfindungsgemäße Saugeinlage kann, wie bereits beschrieben, für Lebensmittelverpackungen, insbesondere für Frischfleisch, Seafood, Geflügel und Früchte verwendet werden. Sie dienen in erster Linie für die Einlage in Schalen aus flüssigkeitsundurchlässigem Kunststoff, in die eine erfindungsgemäße Saugeinlage entweder lose eingelegt, eingesiegelt oder eingeklebt werden kann. Weiterhin eignet Sie sich in großen Abmessungen als Saugeinlage für große Transportverpackung wie z.B. Lufttransportbehälter für Seafood, Fleisch, Geflügel und Früchten.

Ausführungsbeispiele der vorliegenden Erfindung werden nachfolgend anhand der Zeichnungen beschrieben. Es zeigen:
- Figur 1: eine Seitenansicht einer erfindungsgemäßen ersten Ausführungsform,
- Figur 2: eine Seitenansicht einer weiteren Ausführungsform,
- Figur 3: einen Querschnitt durch eine Einsenkung,
- Figur 4: eine Draufsicht auf eine Einsenkung,
- Figur 5: die Seitenansicht einer dritten Ausführungsform der vorliegenden Erfindung und
- Figur 6: die Seitenansicht einer vierten Ausführungsform der vorliegenden Erfindung.

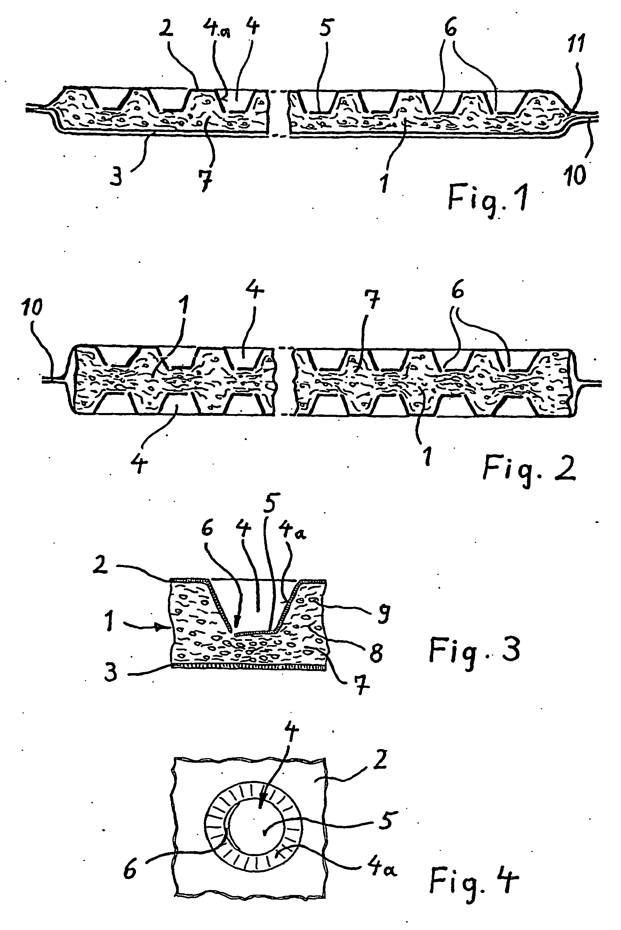

In Figur 1 und den Figuren 3 und 4 ist eine Saugeinlage 1 dargestellt, die eine obere Folienlage 2 und eine untere Folienlage 3 aufweist. Die obere Folienlage 2 zeigt eine dreidimensionale Struktur, bei welcher die Folie eine Vielzahl gleichmäßig verteilter Einsenkungen 4 nach innen hinein aufweist. In der hier dargestellten Ausführungsform laufen die Wände 4a der Einsenkungen 4 nach innen hin konisch zu. Am flachen Boden 5 der Einsenkungen 4 befinden sich Öffnungen 6, durch welche die zu absorbierende Flüssigkeit in Richtung Absorptionslage 7 hindurch tritt. Die Öffnungen 6 sind Schlitze, da sich derartige Schlitze bereits bei einem geringen Stauchen der Folie 2 schließen. Die Schlitze befinden sich gemäß Figuren 3 und 4 nahe des Randes des Bodens 5.

Die Absorptionslage 7 weist hier als gestrichelt dargestellt ungerichtete Fasern 8 auf sowie Granulat 9 aus superabsorbierendem Material.

In der Ausführungsform gemäß Figur 1 und Figur 3 ist die untere Folienlage 3 glatt, d.h. unstrukturiert, also eben, oder anders formuliert: zweidimensional. Die obere und die untere Folienlagen 2 und 3 sind in der in Figur 2 dargestellten Ausführungsform miteinander verbunden, ohne dass die Absorptionslage 7 miterfasst ist. Die Folienlagen 2 und 3 bilden für die Absorptionslage 7 eine Umhüllung, in der die Absorptionslage je nach Größe der Umhüllung auch verrutschen kann. So wird ein relativ weiches Produkt erhalten.

In Figur 2 ist eine weitere Ausführungsform der erfindungsgemäßen Saugeinlage 1 dargestellt. Die Saugeinlage weist wiederum eine obere Folienlage 2 und eine untere Folienlage 3 auf. In der hier dargestellten Ausführungsform sind beide Folienlagen 2, 3 dreidimensional strukturiert. Sie weisen beide nach innen laufende Einsenkungen 4 auf, in deren Böden 5 sich die vorzugsweise schlitzförmigen Öffnungen 6 für die zu absorbierende Flüssigkeit befinden.

In der in Figur 1 dargestellten Ausführungsform sind die Folienlagen 2, 3 an ihren Außenkanten 10 derart miteinander verbunden, dass auch die Außenkante 11 der Absorptionslage 7 miterfasst ist. In dieser Ausgestaltung ist die Absorptionslage 7 nahezu rutschfest in den beiden Folienlagen 2, 3 eingefasst. Die in Figur 2 dargestellte Ausführungsform, in der sowohl die obere Folienlage 2 als auch die untere Folienlage 3 dreidimensional strukturiert ist, hat den Vorteil, dass eine dickere Saugeinlage erhalten wird, welche wiederum ein größeres Stauvolumen aufweist, als eine gleiche Saugeinlage, mit nur einer strukturierten Seite. Das größere Stauvolumen hat nun zur Folge, dass geringe Mengen superabsorbierendes Material benötigt werden, da diese Materialien bei größerem Volumen auch mehr Flüssigkeit aufnehmen können.

Eine erfindungsgemäße Saugeinlage weist üblicherweise zwischen 3 und 25 Einsenkungen pro Quadratzentimeter auf, insbesondere zwischen 4 und 16 Einsenkungen. Die Öffnungen können in einem Winkel von 45 bis 180° geschlitzt werden, wobei vorzugsweise eine Größe von 0,01 bis 0,5 mm erhalten wird, vorzugsweise ist eine Größe zwischen 0,05 und 0,2mm. Die superabsorbierenden Materialien, sofern sie enthalten sind, werden in der Regel als Faser oder Granulate eingesetzt. Die Größe der Öffnungen und die Größe des Granulats des superabsorbierenden Materials sollten derart aufeinander abgestimmt sein, dass das Granulat in trockenem Zustand nicht durch die Öffnungen fallen kann. Auf jeden Fall muss ein Kontakt des Granulats mit dem Lebensmittel vermieden werden.

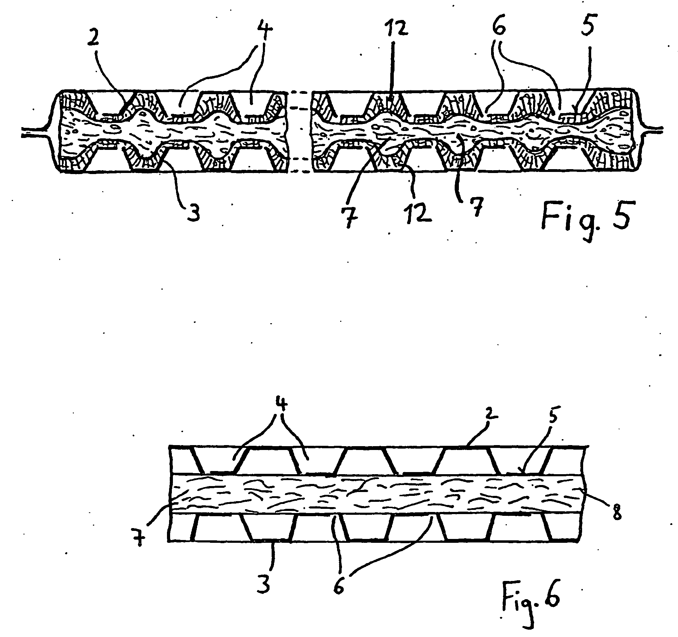

In Figur 5 ist eine dritte Ausführungsform der vorliegenden Erfindung dargestellt. Die erfindungsgemäße Saugeinlage 1 weist zwei Folienlagen 2, 3 mit jeweils dreidimensionaler Struktur auf. Die Absorptionslage 7 ist in der hier dargestellten Ausführungsform sowohl an dessen Oberseite als auch an dessen Unterseite mit einem Vlies 12 beschichtet. Dieses Vlies behindert die Durchlässigkeit für die zu absorbierende Flüssigkeit nicht, verbessert aber die Verschlusswirkung der Öffnungen 6, sobald auf die Saugeinlage 1 Druck ausgeübt wird. Wird auf die Saugeinlage 1 Druck ausgeübt, beispielsweise in Richtung der Absorptionslage 7, so kommt der Boden 5 der Einsenkung mit der Öffnung 6 mit dem Vlies 12 in Kontakt, wodurch sich die Öffnung 6 sofort schließt.

In Figur 3 ist ein Querschnitt durch eine Einsenkung 4 mit einer Öffnung 6 dargestellt. Die Einsenkung 4 läuft nach innen hin konisch zu. Die Öffnung 6 befindet sich in der hier dargestellten Ausführungsform am Boden der Einsenkung.

Ein weiterer Effekt ist zu beobachten, wenn das Volumen der Absorptionslage 7 infolge der Absorption von Flüssigkeit zunimmt, dass von innen her Druck auf die Öffnungen 6 ausgeübt wird, so dass es auch hier zu einem Verschluss dieser Öffnungen kommt. Auch in diesem Fall wird die Wirkung durch ein Vlies 12 verstärkt.

In Figur 6 ist eine weitere Ausführungsform einer erfindungsgemäßen Saugeinlage 1 mit zwei dreidimensional oberflächenstrukturierten Abdecklagen 2, 3 in einer Seitenansicht bereichsweise dargestellt. Im Gegensatz zu den vorhergehenden Ausführungen weist die Absorptionslage 7 bei diesem Beispiel eine im wesentlichen ebene Ober- und Unterseite auf, d.h. der Raum zwischen den Einsenkungen 4 trägt nicht zur Absorption bei. Die Absorptionslage 7 besteht aus Fasern 8, die nach Art einer Zellstofflage bzw. nach Art eines Vlieses zwischen den Einsenkungen 4 liegen.

### Bezugszeichenliste

- 1: Saugeinlage
- 2: Obere Folienlage
- 3: Untere Folienlage
- 4: Einsenkung
- 4a: Wand der Einsenkung 4
- 5: Boden der Einsenkung
- 6: Öffnung, Schlitz
- 7: Absorptionslage
- 8: Faser
- 9: Superabsorbierendes Material
- 10: Außenkante der Folienlage 2, 3
- 11: Außenkante der Absorptionslage 7
- 12: Vlies

## Patentansprüche

1. Saugeinlage (1) für Lebensmittelverpackungen aus einer oberen Abdecklage (2) und einer weiteren unteren Abdecklage (3), sowie einer zwischen der oberen und der unteren Abdecklage befindlichen Flüssigkeitsabsorptionslage (7), bei der mindestens eine der beiden Abdecklagen (2, 3) durch eine Folie gebildet wird, die eine dreidimensionale Struktur aufweist und für Flüssigkeiten durchlässige Öffnungen (6) hat, und die Saugeinlage (1) an ihren Außenkanten zumindest teilweise verschlossen ist,
**dadurch gekennzeichnet,**
**dass** die dreidimensionale Struktur derart ausgebildet ist, dass die Folie zu der Absorptionslage hin Einsenkungen (4) aufweist, wobei sich die Öffnungen (6) ausschließlich in dem Boden (5) der Einsenkungen (4) befinden.

2. Saugeinlage nach Anspruch 1,
**dadurch gekennzeichnet,**
**dass** die Einsenkungen (4) nach innen hinein konisch oder pyramidal zulaufen.

3. Saugeinlage nach einem der Ansprüche 1 oder 2,
**dadurch gekennzeichnet**,
die Öffnungen (6) kurze Schlitze sind.

4. Saugeinlage nach einem der Ansprüche 1 bis 3,
**dadurch gekennzeichnet**,
das die Herstellung der Öffnungen (6) mittels Kalt oder Heißnadelung oder punktuellem Überdehnen der Folie erfolgt

5. Saugeinlage nach einem der Ansprüche 1 bis 4,
**dadurch gekennzeichnet,**
**dass** die gewählte Abdecklage (2) aus thermoplastischem Kunststoff ist, der vorzugsweise auch dehnbar ist, insbesondere aus Polyethylen mit hoher, mittlere oder niederer Dichte, Polypropylen mit hoher, mittlerer oder niederer Dichte, Copolymere aus unterschiedlichen Polyolefinen, insbesondere aus Polyethylen und Polypropylen, Polyethylenterephthalat, Coextrudate aus den vorstehend genannten Kunststoffmaterialien.

6. Saugeinlage nach einem der Ansprüche 1 bis 5,
**dadurch gekennzeichnet**,
das die Folie biologisch abbaubar ist.

7. Saugeinlage nach einem der Ansprüche 1 bis 6,
**dadurch gekennzeichnet,**
**dass** die untere Abdecklage (3) aus dem gleichen Material besteht wie die obere Abdecklage (2) oder aus einem vliesartigen Material auf Kunststoff- oder Cellulosebasis.

8. Saugeinlage nach einem der Ansprüche 1 bis 7,
**dadurch gekennzeichnet,**
**dass** die Abdecklagen (2, 3) entlang der Aussenkanten (9, 10) miteinander verbunden sind.

9. Saugeinlage nach Anspruch 8,
**dadurch gekennzeichnet,**
**dass** die Verbindung der Abdecklagen (2, 3) auch die Absorptionslage (7) miterfasst.

10. Saugeinlage nach einem der Ansprüche 1 bis 9,
**dadurch gekennzeichnet,**
**dass** die Absorptionslage (7) ausgewählt ist aus vliesartigem oder gewerbeartigem Material auf Kunststoff- oder Cellulosebasis.

11. Saugeinlage nach Anspruch 10,
**dadurch gekennzeichnet,**
**dass** die Absorptionslage (7) ein Airlaid-Vlies oder ein Tissuepapier ist.

12. Saugeinlage nach einem der Ansprüche 1 bis 11,
**dadurch gekennzeichnet,**
**dass** die Absorptionslage (7) superabsorbierende Materialien enthält.

13. Saugeinlage nach Anspruch 12,
**dadurch gekennzeichnet,**
**dass** die superabsorbierenden Materialien auf vernetzter Polyacrylsäure, Carboxymetylcellulose, Pektinen oder Gelantinen basieren.

14. Saugeinlage nach einem der Ansprüche 12 oder 13,
**dadurch gekennzeichnet,**
**dass** die Absorptionslage Zuschläge enthält, die unter Einwirkung von Wasser Kohlendioxid erzeugen, insbesondere ein Gemisch aus Carbonaten und Säuren, wie Carbonat oder Bicarbonat und Zitronensäure.

15. Saugeinlage nach einem der Ansprüche 12 bis 14,
**dadurch gekennzeichnet,**
**dass** die Absorptionslage Zuschläge enthält, die die Geruchsstoffe absorbieren und/oder das Wachstum von Bakterien und/oder Schimmelpilzen hemmen.

16. Saugeinlage nach einem der Ansprüche 1 bis 15,
**dadurch gekennzeichnet,**
**dass** die Absorptionslage ein- oder beidseitig mit Vlies oder Tissue beschichtet ist.

17. Saugeinlage nach einem der Ansprüche 1 bis 16, **dadurch gekennzeichnet, dass** die Saugeinlage in Form eines ein- oder mehrreihiger Produktstranges vorliegt, wobei die einzelnen Saugeinlagen durch Perforierungen oder anderen Schwächungen miteinander verbunden sind.

18. Saugeinlage nach Anspruch 17, **dadurch gekennzeichnet, dass** die Produktkette in einer Verpackung Zickzack-förmig gelegt wird und die Enden miteinander verbunden sind.

19. Verwendung einer Saugeinlage nach einem der Ansprüche 1 bis 18 als Einlage für Lebensmittelverpackungen, insbesondere für Verpackungen für Fleisch-, Seafood, Geflügelprodukte und Früchten.

## Claims

1. An absorbent insert (1) for foodstuff packaging, comprising an upper cover layer (2) and a further, lower cover layer (3) as well as a liquid absorption layer (7) situated between the upper and lower cover layers, in which at least one of the two cover layers (2, 3) is formed by a film which has a three-dimensional structure and has openings (6) are permeable to liquids, and the absorbent insert (1) is closed at its outer edges at least partially, **characterized in that** the three-dimensional structure is designed in such a way that the film has depressed portions (4) towards the absorption layer and the openings (6) are situated exclusively on the base of the depressed portions (4).

2. An absorbent insert according to Claim 1, **characterized in that** the depressed portions (4) converge inwards in a conical or pyramidal manner.

3. An absorbent insert according to one of Claims 1 or 2, **characterized in that** the openings (6) are short slots.

4. An absorbent insert according to any one of Claims 1 to 3, **characterized in that** the production of the openings (6) takes place by means of cold or hot needling or point-wise distension of the film.

5. An absorbent insert according to any one of Claims 1 to 4, **characterized in that** the cover layer (2) selected consists of a thermoplastic plastics material which is preferably also extensible, in particular of polyethylene with a high, medium or low density, polypropylene with a high, medium or low density, copolymers of different polyolefins, in particular of polyethylene and polypropylene, polyethylene terephthalate, coextrudates comprising the plastics materials specified above.

6. An absorbent insert according to any one of Claims 1 to 5, **characterized in that** the film is biologically degradable.

7. An absorbent insert according to any one of Claims 1 to 6, **characterized in that** the lower cover layer (3) consists of the same material as the upper cover layer (2) or of a fleece-like material based upon plastics material or cellulose.

8. An absorbent insert according to any one of Claims 1 to 7, **characterized in that** the cover layers (2, 3) are joined to each other along the outer edges (9, 10).

9. An absorbent insert according to Claim 8, **characterized in that** the join of the cover layers (2, 3) also includes the absorption layer (7).

10. An absorbent insert according to any one of Claims 1 to 9, **characterized in that** the absorption layer (7) is selected from fleece-like or fabric-like material based upon plastics material or cellulose.

11. An absorbent insert according to Claim 10, **characterized in that** the absorption layer (7) is an air-laid fleece or a tissue paper.

12. An absorbent insert according to any one of Claims 1 to 11, **characterized in that** the absorption layer (7) contains super-absorbent materials.

13. An absorbent insert according to Claim 12, **characterized in that** the super-absorbent materials are based upon cross-linked polyacrylic acid, carboxymethyl cellulose, pectins or gelatines.

14. An absorbent insert according to one of Claims 12 or 13, **characterized in that** the absorption layer contains supplements which under the action of water produce carbon dioxide, in particular a mixture of carbonates and acids, such as carbonate or bicarbonate and citric acid.

15. An absorbent insert according to any one of Claims 12 to 14, **characterized in that** the absorption layer contains supplements which absorb odorous substances and/or prevent the growth of bacteria and/or mould.

16. An absorbent insert according to any one of Claims 1 to 15, **characterized in that** the absorption layer is coated on one or both sides with fleece or tissue.

17. An absorbent insert according to any one of Claims 1 to 16, **characterized in that** the absorbent insert is present in the form of a product strand in one or more rows, wherein the individual absorbent inserts are joined to one another by perforations or other weakened portions.

18. An absorbent insert according to Claim 17, **characterized in that** the product chain is laid in the form of a zigzag in a package and the ends are joined to each other.

19. Use of an absorbent insert according to any one of Claims 1 to 18 as an insert for foodstuff packaging, in particular for packaging for meat, seafood and poultry products and fruit.

## Revendications

1. Insert absorbant (1) pour emballages de produits alimentaires, constitué d'une couche de couverture supérieure (2) et d'une couche de couverture intérieure supplémentaire (3), ainsi que d'une couche (7) d'absorption des liquides, se trouvant entre la couche de couverture supérieure et la couche de couverture inférieure, au moins l'une des deux couches de couverture (2, 3) étant formée d'une feuille qui présente une structure tridimensionnelle et possède des ouvertures (6) perméables aux liquides, l'insert absorbant (1) étant au moins partiellement obturé au niveau de ses arêtes extérieures, **caractérisé en ce que** la structure tridimensionnelle est configurée de telle sorte que la feuille comporte des renfoncements (4) dirigés vers la couche d'absorption, les ouvertures (6) se trouvant exclusivement dans le fond des renfoncements (4).

2. Insert absorbant selon la revendication 1, **caractérisé en ce que** les renfoncements (4) présentent vers l'intérieur un effilement conique ou pyramidal.

3. Insert absorbant selon l'une des revendications 1 ou 2, **caractérisé en ce que** les ouvertures (6) sont des fentes courtes.

4. Insert absorbant selon l'une des revendications 1 à 3, **caractérisé en ce que** la fabrication des ouvertures (6) s'effectue par perforation à froid ou à chaud, ou par un étirage ponctuel de la feuille.

5. Insert absorbant selon l'une des revendications 1 à 4, **caractérisé en ce que** la couche de couverture choisie (2) est constituée d'un matériau thermoplastique, qui de préférence est de même étirable, en particulier de polyéthylène haute, moyenne ou basse densité, de polypropylène haute, moyenne ou basse densité, de copolymères de différentes polyoléfines, en particulier de polyéthylène et de polypropylène, de poly(téréphtalate d'éthylène), de co-extrudats des matériaux plastiques mentionnés ci-dessus.

6. Insert absorbant selon l'une des revendications 1 à 5, **caractérisé en ce que** la feuille est biodégradable.

7. Insert absorbant selon l'une des revendications 1 à 6, **caractérisé en ce que** la couche de couverture inférieure (3) est constituée du même matériau que la couche de couverture supérieure (2), ou d'un matériau de type non-tissé, à base d'un matériau plastique ou de cellulose.

8. Insert absorbant selon l'une des revendications 1 à 7, **caractérisé en ce que** les couches de couverture (2, 3) sont reliées l'une à l'autre le long des arrêtes extérieures (9, 10).

9. Insert absorbant selon la revendication 8, **caractérisé en ce que** la liaison des couches de couverture (2, 3) englobe aussi la couche d'absorption (7).

10. Insert absorbant selon l'une des revendications 1 à 9, **caractérisé en ce que** la couche d'absorption (7) est choisie parmi un matériau de type non-tissé ou de type tissu, à base d'un matériau plastique ou de cellulose.

11. Insert absorbant selon la revendication 10, **caractérisé en ce que** la couche d'absorption (7) est un non-tissé à liage pneumatique (airlaid) ou un papier mousseline.

12. Insert absorbant selon l'une des revendications 1 à 11, **caractérisé en ce que** la couche d'absorption (7) contient des matériaux superabsorbants.

13. Insert absorbant selon la revendication 12, **caractérisé en ce que** les matériaux superabsorbants sont à base de poly(acide acrylique) réticulé, de carboxyméthylcellulose, de peptines ou de gélatines.

14. Insert absorbant selon l'une des revendications 12 ou 13, **caractérisé en ce que** la couche d'absorption contient des additifs qui, sous l'action de l'eau, produisent du dioxyde de carbone, en particulier un mélange de carbonates et d'acides, tels que le carbonate ou le bicarbonate et l'acide citrique.

15. Insert absorbant selon l'une des revendications 12 à 14, **caractérisé en ce que** la couche d'absorption contient des additifs qui absorbent les substances odorantes et/ou inhibent la prolifération de bactéries et/ou de moisissures.

16. Insert absorbant selon l'une des revendications 1 à 15, **caractérisé en ce que** la couche d'absorption est, sur une ou deux faces, revêtue d'un non-tissé ou d'un papier mousseline.

17. Insert absorbant selon l'une des revendications 1 à 16, **caractérisé en ce que** l'insert absorbant se présente sous forme d'un extrudat simple ou multiple, les inserts absorbants individuels étant reliés les uns aux autres par des perforations ou d'autres affaiblissements.

18. Insert absorbant selon la revendication 17, **caractérisé en ce que** la chaîne de produits est placée en zigzag dans un emballage, et les extrémités sont reliées l'une à l'autre.

19. Utilisation d'un insert absorbant selon l'une des revendications 1 à 18 en tant qu'insert pour des emballages de produits alimentaires, en particulier pour des emballages destinés à des produits de viande, de fruits de mer, de volailles, et de fruits.
